(19) Europäisches Patentamt
European Patent Office
Office européen des brevets

(11) **EP 4 636 859 A1**

(12) **EUROPEAN PATENT APPLICATION**

(43) Date of publication:
**22.10.2025 Bulletin 2025/43**

(21) Application number: **25152721.4**

(22) Date of filing: **20.01.2025**

(51) International Patent Classification (IPC):
*H01M 4/36* (2006.01)   *H01M 6/14* (2006.01)
*H01M 50/107* (2021.01)   *H01M 50/152* (2021.01)
*H01M 50/174* (2021.01)   *H01M 50/188* (2021.01)
*H01M 50/533* (2021.01)   *H01M 50/547* (2021.01)
*H01M 50/552* (2021.01)   *H01M 50/559* (2021.01)
*H01M 50/567* (2021.01)   *H01M 50/586* (2021.01)
*H01M 50/59* (2021.01)   *H01M 50/627* (2021.01)

(52) Cooperative Patent Classification (CPC):
H01M 50/188; H01M 4/368; H01M 6/14;
H01M 50/107; H01M 50/152; H01M 50/533;
H01M 50/567; H01M 50/586; H01M 50/59;
H01M 50/627

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **16.04.2024 CN 202410460455
16.04.2024 CN 202420793926 U
16.04.2024 CN 202420793895 U
26.09.2024 PCT/CN2024/121452**

(71) Applicant: **Eve Energy Co., Ltd.**
**Huizhou, Guangdong 516006 (CN)**

(72) Inventors:
• **LIU, Liangliang**
**Huizhou, Guangdong, 516006 (CN)**
• **CAO, Lang**
**Huizhou, Guangdong, 516006 (CN)**
• **CHEN, Zebin**
**Huizhou, Guangdong, 516006 (CN)**
• **DENG, Huihui**
**Huizhou, Guangdong, 516006 (CN)**

(74) Representative: **Berggren Oy**
**P.O. Box 16**
**Fabianinkatu 21**
**00101 Helsinki (FI)**

(54) **CURRENT COLLECTION PIN, COVER ASSEMBLY, AND BATTERY CELL**

(57) The present disclosure provides a cover assembly (001) and a battery cell (002), and relates to the technical field of battery cell technologies. The cover assembly (001) includes a current collection pin (011) including a body (111), and a slot body (112) is provided on an outer peripheral surface of the body (111). In the present disclosure, by arranging a slot body (112) on the outer peripheral surface of the body (111), a space occupied by the current collection pin (011) inside the battery cell (002) can be controlled, and an outer surface area of the current collection pin (011) can be increased, thereby increasing a contact area between the current collection pin (011) and a positive electrode (025), and increasing a current collection area of the current collection pin (011).

FIG. 7

## Description

TECHNICAL FIELD

The present disclosure relates to the technical field of battery cell technologies, and in particular, to a current collection pin, a cover assembly, and a battery cell.

BACKGROUND

In related arts, the lithium thionyl chloride battery cell is a type of battery cell that uses lithium metal or lithium alloy as a material of a negative electrode and uses a non-aqueous electrolyte solution. The lithium thionyl chloride battery cell includes a shell, and a positive electrode, a negative electrode, a lateral film, a bottom film, and an upper cover film disposed in the shell, and a cover assembly sealing the shell. The cover assembly includes a cover plate, a pole that is insulated and isolated from the cover plate by a glass seal, and a current collection pin that connects the pole to the positive electrode.

SUMMARY

Due to a small size of a current collection pin, its current collection area is small, which results in a small discharge current of a lithium thionyl chloride battery cell using the current collection pin, thereby limiting an application range of the lithium thionyl chloride battery cell. If the current collection area is increased by increasing the size of the current collection pin, a space occupied by the current collection pin inside the battery cell will be increased, which may have a negative impact on an energy density of the lithium thionyl chloride battery cell.

The present disclosure provides a current collection pin, a cover assembly, and a battery cell, which can relieve the problem of a small current collection area of the current collection pin.

In a first aspect, the present disclosure provides a cover assembly. The cover assembly includes a current collection pin, a cover plate, a pole, and a positioning bracket. The current collection pin includes a body, and a slot body is provided on an outer peripheral surface of the body. The cover plate is provided with a mounting hole. The pole is inserted through the mounting hole, is connected to the cover plate through an insulating seal, and is connected to one end of the body. The positioning bracket is sleeved on at least one the pole and the current collection pin.

In a second aspect, the present disclosure provides a battery cell, and the battery cell includes the aforementioned cover assembly.

Beneficial effects of the embodiments of the present disclosure:

In the present disclosure, by arranging a slot body on the outer peripheral surface of the body, a space occupied by the current collection pin inside the battery cell can be controlled, and an outer surface area of the current collection pin can be increased, thereby increasing a contact area between the current collection pin and a positive electrode, and increasing a current collection area of the current collection pin.

BRIEF DESCRIPTION OF THE DRAWINGS

FIG. 1 is a schematic structural diagram of a current collection pin provided by embodiments of the present disclosure;

FIG. 2 is an enlarged view of position A in FIG. 1 provided by embodiments of the present disclosure;

FIG. 3 is a schematic structural diagram of another current collection pin provided by embodiments of the present disclosure;

FIG. 4 is an enlarged view of position B in FIG. 3 provided by embodiments of the present disclosure;

FIG. 5 is an enlarged view of position C in FIG. 1 provided by embodiments of the present disclosure;

FIG. 6 is a schematic structural diagram of a cover assembly provided by embodiments of the present disclosure;

FIG. 7 is a schematic structural diagram of another cover assembly provided by embodiments of the present disclosure;

FIG. 8 is an enlarged view of position D in FIG. 7 provided by embodiments of the present disclosure;

FIG. 9 is a schematic structural diagram of another cover assembly provided by embodiments of the present disclosure;

FIG. 10 is an enlarged view of position F in FIG. 9;

FIG. 11 is an enlarged view of position E in FIG. 6 provided by embodiments of the present disclosure;

FIG. 12 is a schematic structural diagram of another positioning bracket of a cover assembly provided by embodiments of the present disclosure;

FIG. 13 is a schematic structural diagram of another positioning bracket of a cover assembly provided by embodiments of the present disclosure;

FIG. 14 is an enlarged view of position H in FIG. 12;

FIG. 15 is an enlarged view of position I in FIG. 12;

FIG. 16 is a schematic structural diagram of another positioning bracket of a cover assembly provided by embodiments of the present disclosure;

FIG. 17 is a schematic structural diagram of a battery cell provided by embodiments of the present disclosure;

FIG. 18 is an enlarged view of position G in FIG. 17;

FIG. 19 is a schematic structural diagram of another battery cell provided by embodiments of the present disclosure;

FIG. 20 is a schematic structural diagram of yet another battery cell provided by embodiments of the present disclosure;

FIG. 21 is a schematic structural diagram of yet again another battery cell provided by embodiments of the present disclosure.

References symbols are as follows:

001, cover assembly; 011, current collection pin; 111, body; 112, slot body; 1121, first arc surface; 1122, second arc surface; 1123, third arc surface; 1124, fourth arc surface; 1111, hollow structure; 1112, upper through hole; 1113, lower through hole; 1114, variable diameter section; 1115, chamfer; 113, head part; 114, middle part; 115, tail part; 012, cover plate; 121, mounting hole; 122, annular convex platform; 123, liquid injection hole; 124, first annular groove; 125, convex platform; 013, pole; 131, shoulder; 014, insulating seal; 015, positioning bracket; 151, resisting part; 1511, first through hole; 1512, main body; 1523, contact part; 152, sleeving part; 153, positioning ring; 002, battery cell; 021, shell; 022, bottom film; 023, lateral film; 024, negative electrode; 025, positive electrode; 026, upper cover film; 027, sealing nail; 015, positioning bracket; 051, limiting plate; 111a, mating hole; 112a, second flange; 1121a, cylindrical surface; 113a, first flange; 114a, third through hole; 052, abutting member; 121a, tube body; 122a, ring body; 123, second everted edge; 1231, second through hole; 124, first everted edge; 053, first insulating member; 133, protrusion; 132, sunken platform; 054, second insulating member.

DETAILED DESCRIPTION

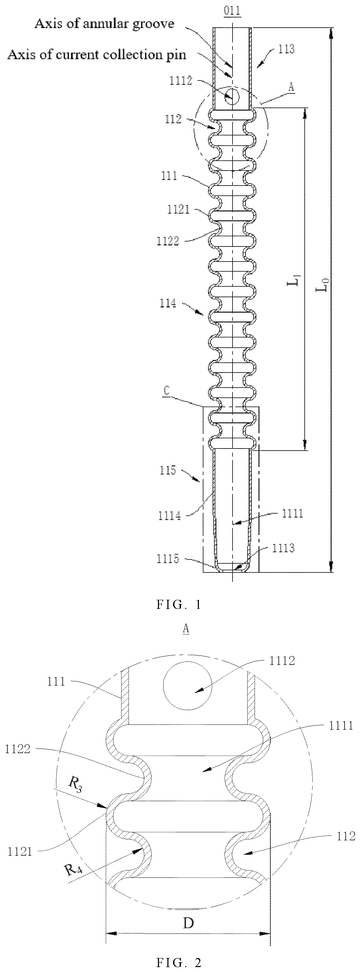

Please refer to FIG. 1. FIG. 1 is a schematic structural diagram of a current collection pin 011 provided by embodiments of the present disclosure. Embodiments of the present disclosure provides the current collection pin 011. The current collection pin 011 includes a body 111. A slot body 112 is provided on an outer peripheral surface of the body 111.

It can be understood that a structural shape of the slot body 112 is not limited. The slot body 112 may be grooves, and there may be multiple grooves distributed along circumferential and axial directions of the current collection pin 011. The slot body 112 may also be an annular groove, or a spiral groove.

In addition, when the current collection pin 011 is used in a lithium thionyl chloride battery cell, the current collection pin 011 is inserted into a positive electrode, and the outer peripheral surface of the body 111 and an inner wall of the slot body 112 are both in contact with the positive electrode.

In the embodiments, by arranging the slot body 112 on the outer peripheral surface of the body 111, a space occupied by the current collection pin 011 inside the battery cell can be controlled, and an outer surface area of the current collection pin 011 can be increased, thereby increasing a contact area between the current collection pin 011 and the positive electrode, and increasing a current collection area of the current collection pin 011. Therefore, a discharge current of the lithium thionyl chloride battery cell using the current collection pin 011 is relatively larger, thereby expanding an application range of the lithium thionyl chloride battery cell.

Moreover, on the premise that an outer diameter of the current collection pin 011 is the same as that of other current collection pins 011, the current collection pin 011 provided in the embodiments is provided with the slot body 112 on the outer peripheral surface of the body 111, so that the positive electrode can be filled in the slot body 112, thereby reducing a battery cell internal space occupied by the current collection pin 011, and further increasing an energy density of the lithium thionyl chloride battery cell.

In one embodiment, the slot body 112 extends along a circumferential direction of the body 111. It can be understood that the slot body 112 may be an annular groove or a spiral groove extending along the circumferential direction of the body 111, or may be multi-sections of grooves spaced apart along the circumferential direction of the body 111 or other structures.

When the slot body 112 extends along the circumferential direction of the body 111 to form the annular groove, please refer to FIG. 2. FIG. 2 is an enlarged view of position A in FIG. 1 provided by embodiments of the present disclosure. Specifically, the slot body 112 is the annular groove, and an axis of the annular groove is parallel to an axis of the current collection pin 011.

Optionally, the axis of the annular groove and the axis of the collecting pin 011 are collinear.

In this embodiment, by the above arrangement, the current collection pin 011 has a centrally symmetrical structure, thereby improving a stress state of the current collection pin 011 and further improving the reliability of the current collection pin 011.

Please refer to FIG. 1. In one embodiment, there are a plurality of annular grooves, and the plurality of annular grooves are arranged sequentially along an extension direction of the axis of the current collection pin 011.

Specifically, the plurality of annular grooves are arranged at even intervals along the axis of the current collection pin 011.

In this embodiment, by arranging the plurality of annular grooves, on the one hand, the surface area of the current collection pin 011 can be increased, so that an embedded structure is formed between the positive electrode and the current collection pin 011, thereby ensuring more contact area between the current collection pin 011 and the positive electrode, further increasing the current collection area of the current collection pin 011, and improving a current collection effect of the current collection pin 011; and on the other hand, the integrity of the current collection pin 011 and the positive electrode can be improved, thereby improving the reliability of the cooperation between current collection pin 011 and the positive electrode.

Please refer to FIG. 1 or FIG. 2. In one embodiment, a surface of the body 111 located between two adjacent annular grooves is a first arc surface 1121. The first arc surface 1121 is disposed outwardly away from the axis of the current collection pin 011. Both sides of the first arc surface 1121 are smoothly connected to walls of the adjacent annular grooves, respectively.

In this embodiment, by the above arrangement, the force on the current collection pin 011 between the two annular grooves is more uniform, thereby reducing the possibility of local stress concentration, and further improving the structural stability and durability of the current collection pin 011.

Please refer to FIG. 1 or FIG. 2. In one embodiment, a bottom wall of the annular groove is a second arc surface 1122. The second arc surface 1122 is concavely disposed close to the axis of the current collection pin 011. Both sides of the second arc surface 1122 are smoothly connected to adjacent first arc surfaces 1121, respectively.

In this embodiment, by the above arrangement, on the one hand, the positive electrode can be filled better in the slot body 112 to avoid empty areas; on the other hand, the current collection pin 011 can be more uniformly stressed at the annular groove, thereby reducing the possibility of local stress concentration, and further improving the structural stability and durability of the current collection pin 011.

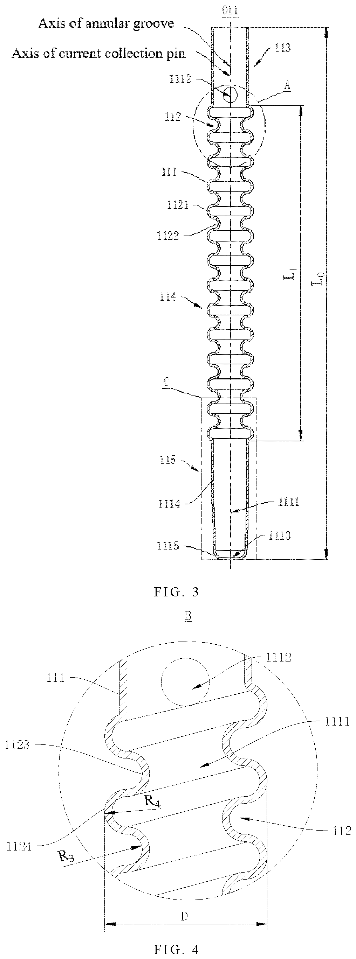

In addition, when the slot body 112 extends and becomes a spiral groove along the circumferential direction of the body 111, please refer to FIG. 3. FIG. 3 is a schematic structural diagram of another current collection pin 011 provided by embodiments of the present disclosure. The slot body 112 is the spiral groove, and a spiral center line of the spiral groove is parallel to the axis of the current collection pin 011.

Optionally, the spiral center line of the spiral groove and the axis of the current collection pin 011 are collinear.

In this embodiment, by arranging the slot body 112 as the spiral groove, an embedded structure is formed between the positive electrode and the current collection pin 011, so that there is more contact area between the current collection pin 011 and the positive electrode, thereby increasing the current collection area of the current collection pin 011 and improving the current collection effect of the current collection pin 011.

In addition, by arranging the slot body 112 as the spiral groove, the current collection pin 011 can be screwed into the positive electrode, thereby reducing the obstruction of the positive electrode to an installation of the current collection pin 011. Therefore, on the one hand, the efficiency of assembling the current collection pin 011 to the positive electrode can be improved, and on the other hand, the integrity of the current collection pin 011 and the positive electrode can be improved, thereby improving the reliability of the cooperation between the current collection pin 011 and the positive electrode.

Please refer to FIG. 4. FIG. 4 is an enlarged view of position B in FIG. 3 provided by embodiments of the present disclosure. In one embodiment, a bottom wall of the spiral groove is a third arc surface 1123. The third arc surface 1123 is concavely disposed close to the axis of the current collection pin 011. Both sides of the third arc surface 1123 are smoothly connected to the outer peripheral surface of the body 111.

In this embodiment, by the above arrangement, on the one hand, the positive electrode can be filled better in the slot body 112 to avoid empty areas; on the other hand, the current collection pin 011 can be more uniformly stressed at the slot body 112, thereby reducing the possibility of local stress concentration, and further improving the structural stability and durability of the current collection pin 011.

Please refer to FIG. 2. In one embodiment, a maximum outer diameter of the body 111 is D. A radius of the first arc surface 1121 is R1, which satisfies: $0 < R1 \leq 0.2D$; and/or, a radius of the second arc surface 1122 is R2, which satisfies:

$$0 < R2 \leq 0.2D.$$

Specifically, the radius of the first arc surface 1121 is R1, which satisfies: $0 < R1 \leq 0.2D$; or, the radius of the second arc surface 1122 is R2, which satisfies: $0 < R2 \leq 0.2D$; or, the radius of the first arc surface 1121 is R1, which satisfies: $0 < R1 \leq 0.2D$, and the radius of the second arc surface 1122 is R2, which satisfies: $0 < R2 \leq 0.2D$.

R1 and R2 may be, but are not limited to, 0.01D, 0.02D, 0.05D, 0.06D, 0.08D, 0.1D, 0.12D, 0.15D, 0.16D, 0.18D, 0.19D, or 0.2D.

Exemplarily:

When D is 1 mm, R1 and R2 may be, but are not limited to, 0.01 mm, 0.03 mm, 0.04 mm, 0.06 mm, 0.08 mm, 0.1 mm, 0.11 mm, 0.12 mm, 0.15 mm, 0.16 mm, 0.18 mm, or 0.2 mm;
When D is 1.5 mm, R1 and R2 may be, but are not limited to, 0.01 mm, 0.05 mm, 0.08 mm, 0.1 mm, 0.13 mm, 0. 14 mm, 0.17 mm, 0.2 mm, 0.22 mm, 0.24 mm, 0.28 mm, or 0.3 mm;
When D is 2 mm, R1 and R2 may be, but are not limited to, 0.01 mm, 0.08 mm, 0.14 mm, 0.19 mm, 0.2 mm, 0. 26 mm, 0.29 mm, 0.3 mm, 0.33 mm, 0.36 mm, 0.38 mm, or 0.4 mm; and
When D is 2.5 mm, R1 and R2 may be, but are not limited to, 0.01 mm, 0.08 mm, 0.16 mm, 0.18 mm, 0.22 mm, 0. 26 mm, 0.31 mm, 0.35 mm, 0.39 mm, 0.41 mm, 0.45 mm, or 0.5 mm.

Specifically, $0.1D \leq R1 \leq 0.2D$, and $0.1D \leq R2 \leq 0.2D$.

In this embodiment, by limiting the radius of the first arc surface 1121 to R1, it can avoid too large radius that causes the maximum outer diameter of the current collection pin 011 to be larger, so that the maximum outer diameter of the current collection pin 011 can be controlled, thereby preventing the current collection pin 011 from occupying a large space inside the battery cell. By limiting the radius of the second arc surface 1122 to R2, it can avoid too large radius that causes a minimum outer diameter of the current collection pin 011 to be too small, so that the resistance of the current collection pin 011 when it is inserted into the positive electrode can be controlled, thereby improving the installation of the current collection pin 011.

In one embodiment, the radius of the first arc surface 1121 is R1, and the radius of the second arc surface 1122 is R2, which satisfies: R2 < R1.

Specifically, $0 < R2 < R1 \leq 0.2D$.

In this embodiment, through the above limitations, on the basis of controlling a width of a cross-section of the current collection pin 011, the radius of the first arc surface 1121 can be made relatively larger, thereby improving the strength of the first arc surface 1121, further improving the ability of the first arc surface 1121 to withstand external pressure and impact force, and reducing damage to the current collection pin 011 caused by collision during transportation, storage, assembly, etc.

The width of the cross-section of the current collection pin 011 is a distance between one side of the second arc surface 1122 close to the axis of the current collection pin 011 and one side of the first arc surface 1121 away from the axis of the current collection pin 011 along a radial direction of the current collection pin 011. Controlling the width can control the resistance against the current collection pin 011 when inserted into the positive electrode, thereby improving the assembly efficiency.

Please refer to FIG. 2. In one embodiment, in a cross-section through a plane where the axis of the current collection pin 011 is located, a radian of the first arc surface 1121 is $\pi$, a radian of the second arc surface 1122 is $\pi$, and the first arc surface 1121 is tangent to the adjacent second arc surface 1122.

It can be understood that a tangent portion between the first arc surface 1121 and the second arc surface 1122 is a circle arranged around the axis of the current collection pin 011. The tangent portions on both sides of the first arc surface 1121 are spaced apart along the axis of the current collection pin 011.

In this embodiment, by the above settings, on the one hand, a surface structure of the current collection pin 011 can be simplified, and a number of smoothly connected curved surfaces between the first arc surfaces 1121 and the second arc surfaces 1122 can be controlled, thereby reducing a manufacturing complexity of the current collection pin 011; on the other hand, by making the first arc surface 1121 and the second arc surface 1122 tangent, too many transition structures on the surface of the current collection pin 011 are avoided, thereby reducing stress concentration, and further improving the stress state of the current collection pin 011.

In one embodiment, a number of the first arc surfaces 1121 is m, and a number of the second arc surfaces 1122 is n, which satisfies: m = n + 1, where m and n are both natural numbers greater than 0.

It can be understood that the second arc surface 1122 is provided between two adjacent first arc surfaces 1121. Correspondingly, one first arc surface 1121 close to a head part 113 is connected to an outer peripheral surface of the head part 113, and one first arc surface 1121 close to a tail part 115 is connected to an outer peripheral surface of the tail part 115, as illustrated in FIG. 1.

In this embodiment, by the above arrangement, the current collection pin 011 can have more first arc surfaces 1121, thereby improving the structural strength of the current collection pin 011. Moreover, by the connection between the first arc surfaces 1121 and the outer peripheral surface of the head part 113 and the connection between the first arc surfaces 1121 and the outer peripheral surface of the tail part 115, the connection strength between a middle part 114 and the head part 113 and between a middle part 114 and the tail part 115 are improved.

Please refer to FIG. 4. In one embodiment, at least part of the outer peripheral surface of the body 111 is a helical surface, and the helical surface is a fourth arc surface 1124. The fourth arc surface 1124 is convexly disposed away from the axis of the current collection pin 011. Both sides of the four arc surfaces 1124 are smoothly connected to the adjacent third arc surfaces 1123, respectively.

It can be understood that part of the outer peripheral surface of the body 111 is a helical surface, or the entire outer peripheral surface of the body 111 is a helical surface. Specifically, part of the outer peripheral surface of the body 111 is configured to form the spiral groove, and the other part forms the helical surface based on the spiral groove.

In this embodiment, by the above arrangement, a portion of the current collection pin 011 located between adjacent groove walls is more evenly stressed, thereby reducing the possibility of local stress concentration, and further improving the structural stability and durability of the current collection pin 011.

Please refer to FIG. 4. In one embodiment, the maximum outer diameter of the body 111 is D, and a radius of the third arc surface 1123 is R3, which satisfies: $0 < R3 \leq 0.2D$; and/or, a radius of the fourth arc surface 1124 is R4, which satisfies: $0 < R4 \leq 0.2D$.

Specifically, the radius of the third arc surface 1123 is R3, which satisfies: $0 < R3 \leq 0.2D$; or, the radius of the fourth arc surface 1124 is R4, which satisfies: $0 < R4 \leq 0.2D$; or, the radius of the third arc surface 1123 is R3, which satisfies: $0 < R3 \leq 0.2D$, and the radius of the fourth arc surface 1124 is R4, which satisfies: $0 < R4 \leq 0.2D$.

R3 and R4 may be, but are not limited to, 0.01D, 0.02D, 0.05D, 0.06D, 0.08D, 0.1D, 0.12D, 0.15D, 0.16D, 0.18D, 0.19D, or 0.2D.

Exemplarily:

When D is 1 mm, R3 and R4 may be, but are not limited to, 0.01 mm, 0.03 mm, 0.04 mm, 0.06 mm, 0.08 mm, 0. 1 mm, 0.11 mm, 0.12 mm, 0.15 mm, 0.16 mm, 0.18 mm, or 0.2 mm;
When D is 1.5 mm, R3 and R4 may be, but are not limited to, 0.01 mm, 0.05 mm, 0.08 mm, 0.1 mm, 0.13 mm, 0. 14 mm, 0.17 mm, 0.2 mm, 0.22 mm, 0.24 mm, 0.28 mm, or 0.3 mm;
When D is 2 mm, R3 and R4 may be, but are not limited to, 0.01 mm, 0.08 mm, 0.14 mm, 0.19 mm, 0.2 mm, 0. 26 mm, 0.29 mm, 0.3 mm, 0.33 mm, 0.36 mm, 0.38 mm, or 0.4 mm; and
When D is 2.5 mm, R3 and R4 may be, but are not limited to, 0.01 mm, 0.08 mm, 0.16 mm, 0.18 mm, 0.22 mm, 0. 26 mm, 0.31 mm, 0.35 mm, 0.39 mm, 0.41 mm, 0.45 mm, or 0.5 mm;

Specifically, $0.1D \leq R3 \leq 0.2D$, and $0.1D \leq R4 \leq 0.2D$.

In this embodiment, by limiting the radius of the third arc surface 1123 to R3, it can avoid too large radius that causes the maximum outer diameter of the current collection pin 011 to be larger, so that the maximum outer diameter of the current collection pin 011 can be controlled, thereby preventing the current collection pin 011 from occupying a large space inside the battery cell. By limiting the radius of the fourth arc surface 1124 to R4, it can avoid too large radius that causes the minimum outer diameter of the current collection pin 011 to be too small, so that the resistance of the current collection pin 011 when it is inserted into the positive electrode can be controlled, thereby improving the installation of the current collection pin 011.

In one embodiment, the radius of the third arc surface 1123 is R3, and the radius of the fourth arc surface 1124 is R4, which satisfies: R3 < R4.

Specifically, $0 < R3 < R4 \leq 0.2D$.

In this embodiment, through the above limitations, on the basis of controlling a width of a cross-section of the current collection pin 011, the radius of the fourth arc surface 1124 can be made relatively larger, thereby improving the strength of the fourth arc surface 1124, further improving the ability of the fourth arc surface 1124 to withstand external pressure and impact force, and reducing damage to the current collection pin 011 caused by collision during transportation, storage, assembly, etc.

The width of the cross-section of the current collection pin 011 is a distance between one side of the third arc surface 1123 close to the axis of the current collection pin 011 and one side of the fourth arc surface 1124 away from the axis of the current collection pin 011 along the radial direction of the current collection pin 011. Controlling the width can control the resistance against the current collection pin 011 when inserted into the positive electrode, thereby improving the assembly efficiency.

Please refer to FIG. 4, in one embodiment, in a cross-section through a plane where the axis of the current collection pin 011 is located, a radian of the third arc surface 1123 is $\pi$, a radian of the fourth arc surface 1124 is $\pi$, and the third arc surface 1123 is tangent to the adjacent fourth arc surface 1124.

In this embodiment, by the above settings, on the one hand, a surface structure of the current collection pin 011 can be simplified, and a number of smoothly connected curved surfaces between the third arc surfaces 1123 and the fourth arc surfaces 1124 can be controlled, thereby reducing a manufacturing complexity of the current collection pin 011; on the other hand, by making the third arc surface 1123 and the fourth arc surface 1124 tangent, too many transition structures on the surface of the current collection pin 011 are avoided, thereby reducing stress concentration, and further improving the stress state of the current collection pin 011.

Please refer to FIG. 1 or FIG. 3. In one embodiment, the body 111 is a hollow structure 1111.

Specifically, the body 111 is a uniform wall thickness structure and a thin-walled structure.

In this embodiment, by arranging the hollow structure 1111 on the body 111, a thickness of the body 111 can be reduced, so that the body 111 has greater elasticity, especially when the body 111 has the thin-walled structure, its elasticity is greater Thus, a contact pressure between the current collection pin 011 and the positive electrode can be increased, thereby increasing the reliability of the contact between the current collection pin 011 and the positive electrode, which is beneficial to enhancing the current collection effect of the current collection pin 011.

In addition, arranging the body 111 to have a uniform wall thickness structure can make the force on the current collection pin 011 more uniform, thereby reducing the possibility of local stress concentration, further improving a compression resistance of the current collection pin 011, and ultimately improving the structural stability and durability of the current collection pin 011.

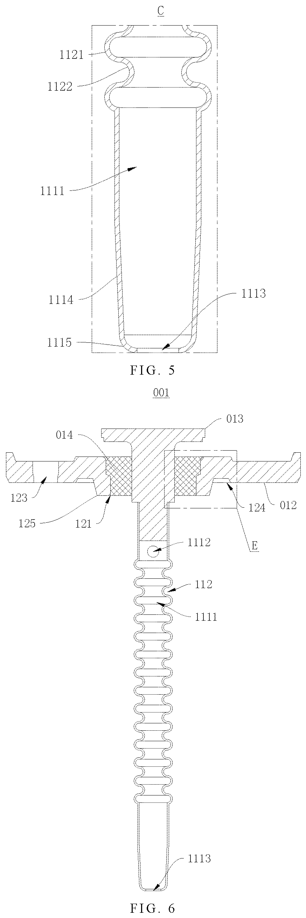

Please refer to FIG. 1 and FIG. 5. FIG. 5 is an enlarged view of position C in FIG. 1 provided by embodiments of the present disclosure. In one embodiment, an upper through hole 1112 and a lower through hole 1113 communicating with an interior of the body 111 are respectively provided at both ends of the body 111.

In this embodiment, by the above arrangement, when the electrolyte is injected after the battery cell is assembled, a part of the electrolyte can flow into the hollow structure 1111 from the upper through hole 1112 and be discharged to the positive electrode from the lower through hole 1113, thereby improving an infiltration efficiency of the battery cell.

Please refer to FIG. 5. In one embodiment, the two ends of the body 111 are a top end and a bottom end, respectively. The top end is configured to be connected to a pole 013 of the battery cell. The body 111 has a variable diameter section 1114 located at the bottom end, and an outer diameter of the variable diameter section 1114 gradually decreases along a direction away from the top end.

It can be understood that when assembling the battery cell, after placing a negative electrode, a bottom film, a lateral film, the positive electrode, and a top film in the shell 1, the current collection pin 011 is inserted into the positive electrode. In this embodiment, by arranging the variable diameter section 1114 at the end of the current collection pin 011 away from the top end, the resistance against the current collection pin 011 when inserted into the positive electrode can be reduced, the stress state of the current collection pin 011 can be improved, and the assembly efficiency can be improved.

In addition, the lower through hole 1113 is provided on an end surface of the bottom end.

Referring to FIG. 5. In one embodiment, a chamfer 1115 is provided between the outer peripheral surface of the body 111 and the end surface of the bottom end.

Exemplarily, the chamfer 1115 is a fillet chamfer 1115.

In this embodiment, by the above arrangement, on the one hand, the resistance against the current collection pin 011 when inserted into the positive electrode can be reduced; on the other hand, the stress state of the bottom end of the current collection pin 011 can be improved, thereby improving the structural stability and durability of the current collection pin 011.

In one embodiment, a conductive layer is provided on the outer peripheral surface of the body 111 and/or the inner wall of the slot body 112, and the conductive layer is one or more of a nickel plating layer, a gold plating layer, and a carbon coating layer

It can be understood that the conductive layer is provided on the outer peripheral surface of the body 111, or the conductive layer is provided on the inner wall of the slot body 112, or the conductive layer is provided on both the outer peripheral surface of the body 111 and the inner wall of the slot body 112.

In this embodiment, by the above arrangement, an electrical conductivity of the current collection pin 011 can be improved, thereby enhancing the current collection effect of the current collection pin 011.

Please refer to FIG. 1 or FIG. 3. In one embodiment, along an axial direction of the current collection pin 011, the body 111 includes the head part 113, the middle part 114, and the tail part 115 connected in sequence. The slot body 112 is provided on the middle part 114.

A maximum outer diameter of the middle part 114 is greater than a maximum outer diameter of the head part 113 and a maximum outer diameter of the tail part 115.

It can be understood that the head part 113 is configured to connect with the pole of the battery cell, and the tail part 115 faces the bottom of the battery cell and is configured to provide guidance for the current collection pin 011 being inserted into the positive electrode.

In this embodiment, by the above arrangement, the slot body 112 can be avoided from being arranged on the head part 113 or the tail part 115. In this way, on the one hand, an outer surface of the head part 113 is made flat, making it easier to clamp the head part 113 to weld the head part 113 to the pole; on the other hand, the resistance of the tail part 115 can be reduced, thereby reducing the resistance of the tail part 115 being inserted into the positive electrode.

Please refer to FIG. 1 or FIG. 3, in one embodiment, a length of the body 111 is L0, and a length of the middle part 114 is L1, which satisfies: $0 < L1 \leq 0.7L0$.

It can be understood that L1 may be, but is not limited to, 0.1L0, 0.2L0, 0.25L0, 0.3L0, 0.4L0, 0.5L0, 0.6L0, 0.65L0, 0.66L0, or 0.7L0.

For example, when L0 is 20 mm, L1 may be, but is not limited to, 2 mm, 4 mm, 4.6 mm, 5 mm, 6 mm, 7.3 mm, 8.8 mm, 9 mm, 10 mm, 10.5 mm, 11 mm, 14 mm.

In this embodiment, through the above limitations, it can avoid too long length of the slot body 112 that affects the arrangement of the head part 113 and the tail part 115, thereby improving the reliability of the connection between the head part 113 and the pole, and improving the smoothness of inserting the current collection pin 011 into the positive electrode.

Please refer to FIG. 6. FIG. 6 is a schematic structural diagram of a cover assembly 001 provided by embodiments of the present disclosure. Embodiments of the present disclosure provides a cover assembly 001. The cover assembly 001 includes a cover plate 012, the pole 013 and the current collection pin 011 disclosed in some embodiments of the present disclosure. The cover plate 012 is provided with a mounting hole 121. The pole 013 is inserted through the mounting hole 121, and the pole 013 is connected to the cover plate 012 through an insulating seal 014. One end of the body 111 is connected to the pole 013.

Exemplarily, the insulating seal 014 is a glass insulator, and the glass insulator forms a glass seal between the pole 013 and the mounting hole 121 to seal the pole 013 and the mounting hole 121.

In addition, the pole 013 may be directly welded to the current collection pin 011, or the two may be plugged in first and then welded.

In this embodiment, by using the current collection pin 011 disclosed in some embodiments of the present disclosure, the current collection pin 011 can not only control the space it occupies inside the battery cell, but also increase the outer surface area of the current collection pin 011, thereby increasing the contact area between the current collection pin 011 and the positive electrode, and further increasing the current collection area of the current collection pin 011. Therefore, the discharge current of the lithium thionyl chloride battery cell using the cover assembly 001 is larger, thereby expanding The present disclosure range of the lithium thionyl chloride battery cell.

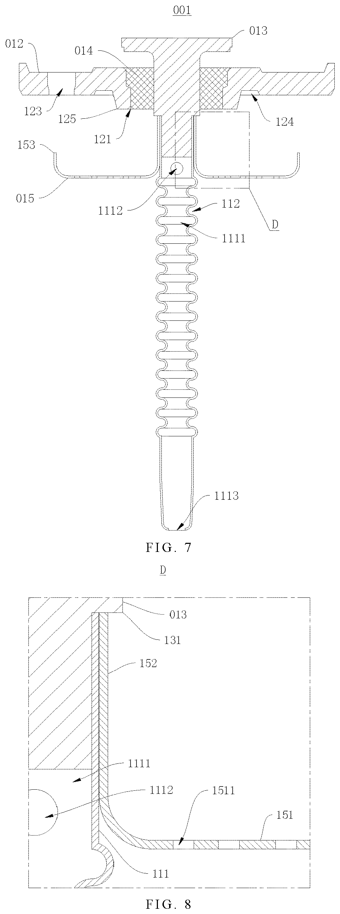

Please refer to FIG. 7. FIG. 7 is a schematic structural diagram of another cover assembly 001 provided by embodiments of the present disclosure. In one embodiment, the cover assembly 001 is applied to a lithium thionyl chloride battery cell. The cover assembly 001 further includes a positioning bracket 015. The positioning bracket 015 is sleeved on the pole 013 and/or the current collection pin 011, and is stopped and matched with the pole 013. The positioning bracket 015 has a resisting part 151, and the resisting part 151 is configured to abut against the positive electrode of the lithium thionyl chloride battery cell.

The positioning bracket 015 is sleeved on the pole 013, or the positioning bracket 015 is sleeved on the current collection pin 011, or part of the positioning bracket 015 is sleeved on the pole 013 and part of the positioning bracket 015 is sleeved on the current collection pin 011.

It can be understood that the positive electrode expands after being wetted with the electrolyte, and the positive electrode also expands during a discharge process. When a height of the expanded positive electrode becomes beyond a height of the negative electrode 024, on the one hand, the current collection effect may be deteriorated, leading to poor discharge; on the other hand, the positive electrode may flow to the negative electrode 024, causing the battery cell to be short circuited.

Based on this, in this embodiment, by arranging the positioning bracket 015, the expansion of the positive electrode can be limited when the positive electrode expands, thereby ensuring the current collection effect, and further improving a consistency between a discharge capacity of the lithium thionyl chloride battery cell and an actual discharge amount.

Please refer to FIG. 8. FIG. 8 is an enlarged view of position D in FIG. 7 provided by embodiments of the present disclosure. In one embodiment, the positioning bracket 015 includes a sleeving part 152 and a resisting part 151. The sleeving part 152 is sleeved on the pole 013/current collection pin 011 and is stopped and matched with the pole 013. One end of the sleeving part 152 away from the cover plate 012 is connected to the resisting part 151. The resisting part 151 extends from the sleeving part 152 in a direction away from the axis of the current collection pin 011.

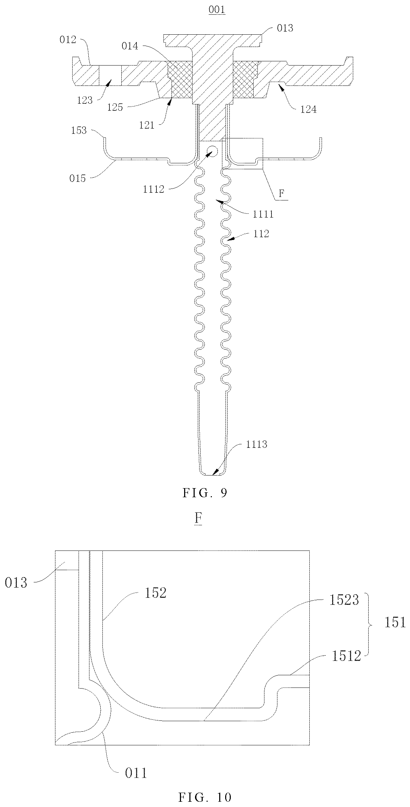

Please refer to FIG. 9 and FIG. 10. FIG. 9 is a schematic structural diagram of another cover assembly 001 provided by embodiments of the present disclosure, and FIG. 10 is an enlarged view of position F in FIG. 9. In one embodiment, the positioning bracket 015 is a conductor, and the resisting part 151 includes a main body 1512 and a contact part 1513 protruding from a surface of the main body 1512 toward the positive electrode of the battery cell. The contact part 1513 is configured to contact the positive electrode of the lithium thionyl chloride battery cell.

It can be understood that the contact part 1513 may be provided at any position of the main body 1512, such as an end of the main body 1512 close to the sleeving part 152, or an end of the main body 1512 away from the sleeving part 152.

An upper cover film is provided on an upper end of the positive electrode. Correspondingly, a hole or opening is provided on the upper cover film at a portion opposite to the contact part 1513, so that the contact part 1513 can contact the positive electrode after passing through the upper cover film.

In this embodiment, by the above arrangement, the positioning bracket 015 can be used as a current collection member between the positive electrode and the pole 013, thereby increasing the current collection area between the pole 013 and the positive electrode, and further enhancing the current collection effect.

Please refer to FIG. 9 and FIG. 10. In one embodiment, the contact part 1513 is provided between the main body 1512 and the sleeving part 152, and both ends of the contact part 1513 are connected to the main body 1512 and the sleeving part 152, respectively.

In this embodiment, by the above arrangement, the contact part 1513 is disposed adjacent to the pole 013, so that a current collection path of the contact part 1513 can be shortened, thereby improving the current collection effect.

Please refer to FIG. 8. In one embodiment, the positioning bracket 015 further includes a positioning ring 153. The positioning ring 153 is located between the resisting part 151 and the cover plate 012. One end of the positioning ring 153 away from the cover plate 012 is connected to a periphery of the resisting part 151.

It can be understood that the lithium thionyl chloride battery cell consists of the positive electrode, the lateral film 023, the negative electrode 024, and the shell 021 in order from the current collection pin 011 outward. In order to improve the positioning bracket 015 to limit the expansion of the positive electrode, an outer diameter of the resisting part 151 is consistent with an outer diameter of the positive electrode. An outer periphery of the resisting part 151 faces the lateral film 023. When the outer periphery of the resisting part 151 is directly opposite to the lateral film 023, a corner of the outer periphery of the resisting part 151 may scratch the lateral film 023.

Based on this, in this embodiment, by providing the positioning ring 153, it is possible to avoid direct contact between the corner of the outer periphery of the resisting part 151 and the lateral film 023, thereby preventing the lateral film 023 from being scratched by the resisting part 151, and further improving the reliability of the battery cell.

Please refer to FIG. 8. FIG. 8 is an enlarged view of position D in FIG. 7 provided by embodiments of the present disclosure. In one embodiment, the resisting part 151 is provided with a first through hole 1511 and the first through hole 1511 is configured for flowing the electrolyte.

Exemplarily, there are a plurality of first through holes 1511, and the plurality of first through holes 1511 are distributed along circumferential and radial directions of the resisting part 151.

In this embodiment, by the above arrangement, when the electrolyte is injected after the battery cell is assembled, the electrolyte can flow into the positive electrode from the first through hole 1511 to facilitate the infiltration of the battery cell.

Please refer to FIG. 8. In one embodiment, the pole 013 has a shoulder 131. A large diameter section of the pole 013 is located on one side of the shoulder 131 away from the positioning bracket 015. The positioning bracket 015 abuts against the shoulder 131.

In this embodiment, the shoulder 131 is provided and the positioning bracket 015 abuts against the shoulder 131, so that the positioning bracket 015 and the pole 013 are blocked and matched, thereby improving the positional stability of the positioning bracket 015. In this way, the positioning bracket 015 is stably in a limiting position for the expansion of the positive electrode.

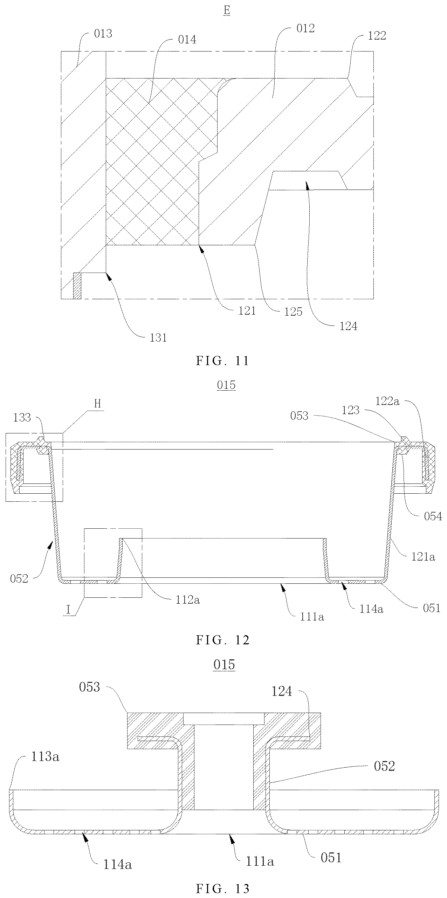

In addition to the structure of the positioning bracket 015 provided in the previous embodiments of the present disclosure, the embodiments of the present disclosure also provide other structures of the positioning bracket 015 through the following embodiments. Please refer to FIG. 12 or FIG. 13, FIG. 12 is a schematic structural diagram of another positioning bracket 015 of the cover assembly 001 provided by embodiments of the present disclosure, and FIG. 13 is a schematic structural diagram of another positioning bracket 015 of the cover assembly 001 provided by embodiments of the present disclosure. In the embodiments of the present disclosure, the cover assembly 001 is applied to the lithium thionyl chloride battery cell. The positioning bracket 015 in this embodiment includes a limiting plate 051, an abutting member 052, and a first insulating member 053. The limiting plate 051 is provided with a mating hole 111a, and the limiting plate 051 is configured to limit the expansion of the positive electrode of the lithium thionyl chloride battery cell. The abutting member 052 is provided on one side of the limiting plate 051 away from the positive electrode. The abutting member 052 is configured to abut against an inner wall of the shell of the lithium thionyl chloride battery cell or the pole of the lithium thionyl chloride battery cell along a radial direction of the mating hole 111a. The first insulating member 053 is provided on the abutting member 052, and is configured to insulate and isolate the abutting member 052 from components in contact with it. The current collection pin 011 is inserted in the mating hole 111a.

It can be understood that when the abutting member 052 is configured to abut against the inner wall of the shell of the lithium thionyl chloride battery cell along the radial direction of the mating hole 111a, the first insulating member 053 is located on one side of the abutting member 052 close to the inner wall of the shell, as illustrated in FIG. 12. When the abutting member 052 is configured to abut against the pole along the radial direction of the mating hole 111a, the first insulating piece 053 is located on one side of the abutting member 052 close to the pole, as illustrated in FIG. 13.

Generally, a part of the lithium thionyl chloride battery cells collect current through the current collection pin or a current collection rod, and the current collection pin/current collection rod is coaxially connected to the pole. Another part of the lithium thionyl chloride battery cells collect current through a current collection tube, and the current collection tube is connected to the pole through a tab. Therefore, in order to avoid interference between the positioning bracket 015 and the tab, the positioning bracket 015 disclosed in the embodiments of the present disclosure that abuts against the pole is mainly used in the lithium thionyl chloride battery cells those collect current through the current collection pin or current collection rod. The positioning bracket 015 disclosed in the embodiments of the present disclosure, which abuts against the inner wall of the shell of the lithium thionyl chloride battery cell, may be applied to the lithium thionyl chloride battery cells which collect current through the current collection pin or current collection rod, and may also be applied to the lithium thionyl chloride battery cells those collect current through the current collection tube.

The first insulating member 053 may be glued to the abutting member 052, or may be formed on the abutting member 052 by an injection molding process. The limiting plate 051 and the abutting member 052 may be integrally formed, or may be welded and connected as one. Their material may be, but is not limited to, stainless steel, pure nickel, stainless steel nickel-plated, cold-rolled carbon steel nickel-plated, etc. A material of the first insulating member 053 may be, but is not limited to, polytetrafluoroethylene.

In addition, a friction force between the abutting member 052 and a component it abuts against is less than a pushing force on the positioning bracket 015 by the positive electrode after it absorbs liquid and expands. Therefore, when the electrolyte is injected, the positive electrode absorbs liquid and expands to contact the positioning bracket 015 and push the positioning bracket 015 to move.

In this embodiment, by applying the positioning bracket 015 to the lithium thionyl chloride battery cell, after the positive electrode absorbs liquid and expands to produce an upward pushing force on the positioning bracket 015, the positioning bracket 015 can be moved upward along with the expansion of the positive electrode until the positive electrode completes the liquid-absorbing expansion. At this time, a position of the positioning bracket 015 is consistent with a height of the positive electrode after liquid-absorbing expansion, so that the position of the positioning bracket 015 can be adaptively adjusted based on an expansion height of the positive electrode after absorbing liquid, thereby making the position of the positioning bracket 015 to match with the height of the positive electrode after liquid-absorbing expansion. Therefore, the positioning bracket 015 can be prevented from being damaged due to the large upward pushing force of the positive electrode, and it can avoid a gap between the positive electrode and the positioning bracket 015 that may cause poor discharge of the lithium thionyl chloride battery cell.

In addition, by contacting the positioning bracket 015 with the pole or the inner wall of the shell, it can also inhibit the liquid-absorbing expansion of the positive electrode to avoid excessive expansion of the positive electrode, thereby improving the consistency between the discharge capacity of the lithium thionyl chloride battery cell and the actual discharge amount.

Please refer to FIG. 12. In one embodiment, when the abutting member 052 is configured to abut against the inner wall of the shell along the radial direction of the mating hole 111 a, the abutting member 052 is disposed on a periphery of the limiting plate 051. Correspondingly, the first insulating member 053 is disposed on one side of the abutting member 052 close to the inner wall of the shell.

In this embodiment, by disposing the abutting member 052 on the periphery of the limiting plate 051, the abutting member 052 and the limiting plate 051 can be formed at one time by stamping, thereby improving the manufacturing efficiency of the positioning bracket 015.

Please refer to FIG. 12. In one embodiment, the abutting member 052 has a tubular structure. One end of the abutting member 052 is connected to the periphery of the limiting plate 051. An outer wall of the abutting member 052 is configured to abut against the inner wall of the shell along the radial direction of the mating hole 111a.

Exemplarily, when applied to the lithium thionyl chloride battery cell, the abutting member 052 is coaxially arranged with the pole.

In this embodiment, by designing the abutting member 052 as the tubular structure, there is more contact area between the positioning bracket 015 and the lithium thionyl chloride battery cell and the contact area can be made more symmetrical, thereby improving the stress state of the positioning bracket 015 and the shell of the lithium thionyl chloride battery cell, avoiding excessive stress concentration, and improving reliability.

Please refer to FIG. 12. In one embodiment, the first insulating member 053 extends to an end of the abutting member 052 away from the limiting plate 051.

It can be understood that when the lithium thionyl chloride battery cell is discharged at high temperature, the positive electrode expands to a high amount, thus pushing up the positioning bracket 015. When the positioning bracket 015 is moved up too high, it may come into contact with the cover plate and cause a short circuit.

Based on this, in this embodiment, by the above arrangement, when the positioning bracket 015 is pushed up to the cover plate by the expanded positive electrode, it can be insulated from the cover plate, thereby improving reliability and facilitating normal discharge of the lithium thionyl chloride battery cell.

In one embodiment, the first insulating member 053 is an elastic insulating member.

In this embodiment, by designing the first insulating member 053 as the elastic insulating member, the first insulating member 053 can be compressed when the positive electrode expands to push the positioning bracket 015 to make the positioning bracket 015 to abut against the cover plate. When the positive electrode of the lithium thionyl chloride battery cell shrinks, the positioning bracket 015 can be pushed down based on a deformation recovery force of the first insulating member 053 to return the positioning bracket 015 to maintain the limiting effect on the positive electrode. Thus, the matching between the position of the positioning bracket 015 and the height of the positive electrode can be improved, thereby improving the consistency between the discharge capacity of the lithium thionyl chloride battery cell and the actual discharge amount, and further improving the reliability of the lithium thionyl chloride battery cell.

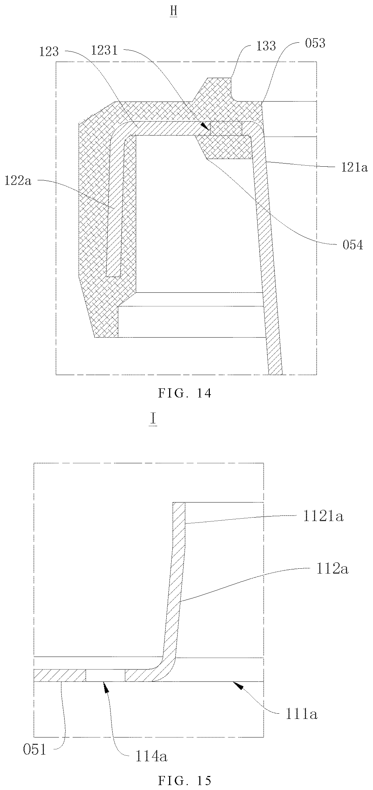

Please refer to FIG. 14. FIG. 14 is an enlarged view of position H in FIG. 12. In one embodiment, a protrusion 133 is provided on one end of the first insulating member 053 away from the limiting plate 051.

In this embodiment, a deformation amount of the first insulating member 053 can be increased by providing the protrusion 133, thereby increasing the deformation recovery force of the first insulating member 053 after being compressed, and further ensuring that the deformation recovery force of the first insulating member 053 can push the positioning bracket 015 down to a position consistent with the height of the positive electrode.

Please refer to FIG. 14. In one embodiment, the protrusion 133 extends along a circumferential direction of the mating hole 111a to form an annular structure, or there are multiple protrusions 133, and the plurality of protrusions 133 are spaced apart along the circumferential direction of the mating hole 111a.

In this embodiment, by the above arrangement, a contact area between the protrusion 133 and the cover plate can be increased, thereby improving the stress state of the cover plate, avoiding damage to the cover plate caused by stress concentration, and further improving the reliability of the lithium thionyl chloride battery cell.

Please refer to FIG. 12. In one embodiment, the abutting member 052 includes a tube body 121a and a ring body 122a. One end of the tube body 121a is connected to the periphery of the limiting plate 051. The other end of the tube body 121a is provided with a second everted edge 123. An outer periphery of the second everted edge 123 is connected to one end of the ring body 122a. The ring body 122a is sleeved on one end of the tube body 121a away from the limiting plate 051. An outer wall of the ring body 122a is configured to abut against the inner wall of the shell along the radial direction of the mating hole 111a. The outer wall of the ring body 122a is provided with the first insulating member 053.

Exemplarily, the ring body 122a, the tube body 121a, the second everted edge 123 and the limiting plate 051 are integrally formed, specifically stamped.

In this implementation, by the above arrangement, an overall structure of the positioning bracket 015 is simple and easy to manufacture, so that manufacturing costs of the lithium thionyl chloride battery cell can be controlled.

Referring to FIG. 14, in one embodiment, a second through hole 1231 is provided on the second everted edge 123. The first insulating member 053 extends into the second through hole 1231 and is connected to a wall of the second through hole 1231.

Since materials of the first insulating member 053 and the abutting member 052 are different, a bonding strength between them is weak, which may easily cause an end of the first insulating member 053 close to the mating hole 111a to separate from the abutting member 052.

Based on this, in this embodiment, by the above arrangement, the connection strength between the first insulating member 053 and the abutting member 052 can be enhanced, thereby improving reliability of the connection between the first insulating member 053 and the abutting member 052.

Referring to FIG. 14, in one embodiment, the positioning bracket 015 further includes a second insulating member 054. The second insulating member 054 is disposed on one side of the second everted edge 123 close to the limiting plate 051. The second insulating member 054 is connected to a portion of the first insulating member 053 located in the second through hole 1231.

The first insulating member 053 and the second insulating member 054 may be made of the same material, and both are formed on the abutting member 052 by an injection molding process. Specifically, the abutting member and the limiting plate 051 integrally connected are first stamped and formed, then they are placed in an injection mold, and then injection liquid is filled in a cavity of the mold. The positioning bracket 015 with the first insulating member 053 and the second insulating member 054 can be formed after the injection liquid solidifies.

In this embodiment, by the above arrangement, when the end of the first insulating member 053 close to the mating hole 111a is moved away from the abutting member, the second insulating member 054 provides a pulling force on the first insulating member 053 to restrict the first insulating member 053 from the abutting member, thereby improving the reliability of the connection between the first insulating member 053 and the abutting member

Please refer to FIG. 14. In one embodiment, the ring body 122a is disposed in the first insulating member 053.

In this embodiment, by the above arrangement, a connection area between the first insulating member 053 and the ring body 122a can be increased, thereby improving the reliability of the connection between the ring body 122a and the first insulating member 053 to avoid separation from each other.

Please refer to FIG. 12. In one embodiment, the tube body 121a is a tapered cylinder, and a small diameter end of the tapered cylinder is disposed close to the limiting plate 051.

In a longitudinal section of the tube body 121a, an angle between a conical surface of the tube body 121a and an axis of the tube body 121a ranges from 2° to 5°, and the angle may be but is not limited to 2°, 2.5°, 3°, 3.1°, 3.8°, 4°, 4.7°, or 5°.

In this embodiment, by the above arrangement, the positioning bracket 015 integrates the limiting plate 051 that abuts against the positive electrode and the end that abuts against the inner wall of the shell through the tube body 121a. In this way, on the one hand, interference between the tube body 121a and the lateral film can be avoided, and on the other hand, a distance between the positioning bracket 015 and the negative electrode can be increased. As a result, the reliability of the lithium thionyl chloride battery cell can be improved.

Please refer to FIG. 12, in one embodiment, along an axial direction of the mating hole 111a, a second flange 112a is provided on the periphery of the mating hole 111a. The second flange 112a is located on one side of the limiting plate 051 close to the abutting member 052. The second flange 112a is sleeved on the current collection pin 011.

A chamfer is provided on a connection position between the second flange 112a and the limiting plate 051, specifically a rounded chamfer.

It can be understood that some lithium thionyl chloride battery cells are provided with other components in the middle. In this embodiment, by providing the second flange 112a, the positioning bracket can contact other components through the second flange 112a during the installation process, thereby preventing the end of the mating hole 111a from scratching other components.

A chamfer is provided at a connection position between the second flange 112a and the limiting plate 051 to guide the installation of the positioning bracket 015 and reduce scratches on other components when the positioning bracket 015 is installed.

Please refer to FIG. 12. In one embodiment, an inner peripheral surface of the second flange 112a is a tapered surface, and a large diameter end of the tapered surface is disposed close to the limiting plate 051.

In a longitudinal section of the second flange 112a, an angle between an inner peripheral surface of the second flange 112a and an axis of the second flange 112a ranges from 1° to 10°, and the angle may be but is not limited to 1°, 2.5°, 4°, 5.1°, 6.8°, 8°, 9.7°, or 10°.

In this embodiment, by the above arrangement, the guidance when installing the positioning bracket can be improved to prevent the positioning bracket 015 from scratching other components.

Please refer to FIG. 15. FIG. 15 is an enlarged view of position I in FIG. 12. In one embodiment, one end of the inner peripheral surface of the second flange 112a

close to the limiting plate 051 is a tapered surface, and the other end is a cylindrical surface 1121a.

In this embodiment, by the above arrangement, after the positioning bracket 015 is assembled in place, the cylindrical surface 1121a is attached to other components, thereby increasing a contact area between the positioning bracket 015 and other components, improving the stress state of the other components, and avoiding local stress concentration. As a result, the reliability of the lithium thionyl chloride battery cell can be improved.

Referring to FIG. 14, in one embodiment, an end of an outer peripheral surface of the first insulating member 053 close to the limiting plate 051 is provided with a chamfer, specifically a rounded chamfer.

In this embodiment, by the above arrangement, when installing the positioning bracket 015, the chamfer can be configured to guide the installation of the positioning bracket 015 through an opening of the shell, so as to reduce the collision and installation resistance when the positioning bracket 015 is installed into the shell, thereby improving installation efficiency.

Please refer to FIG. 13. In one embodiment, when the abutting member 052 is configured to abut against the pole along the radial direction of the mating hole 111a, the abutting member 052 is disposed at the periphery of the mating hole 111a. Correspondingly, the first insulating member 053 is disposed on one side of the abutting member 052 close to the pole.

In this embodiment, by arranging the abutting member 052 at the periphery of the mating hole 111a, the abutting member 052 and the limiting plate 051 can be formed at one time by stamping, thereby improving the manufacturing efficiency of the positioning bracket 015.

Please refer to FIG. 13. In one embodiment, the abutting member 052 has a tubular structure. One end of the abutting member 052 is connected to the periphery of the mating hole 111a. The abutting member 052 is configured to be sleeved on the pole, and an inner wall of the abutting member 052 is configured to abut against the pole along the radial direction of the mating hole 111a.

In this embodiment, by designing the abutting member 052 as the tubular structure, there is more contact area between the positioning bracket 015 and the lithium thionyl chloride battery cell and the contact area can be made more symmetrical, thereby improving the stress state of the positioning bracket 015 and the shell of the lithium thionyl chloride battery cell, avoiding excessive stress concentration, and improving reliability.

Please refer to FIG. 13. In one embodiment, the first insulating member 053 extends to an end of the abutting member 052 away from the limiting plate 051.

It can be understood that when the lithium thionyl chloride battery cell is discharged at high temperature, the positive electrode expands to a high amount, thus pushing up the positioning bracket 015. When the positioning bracket 015 is moved up too high, it may come into contact with the cover plate and cause a short circuit.

Based on this, in this embodiment, by the above arrangement, when the positioning bracket 015 is pushed up to the cover plate by the expanded positive electrode, it can be insulated from the cover plate, thereby improving reliability and facilitating normal discharge of the lithium thionyl chloride battery cell.

In one embodiment, the first insulating member 053 is an elastic insulating member.

In this embodiment, by designing the first insulating member 053 as an elastic insulating member, the first insulating member 053 can be compressed when the positive electrode expands to push the positioning bracket 015 to make the positioning bracket 015 to abut against the cover plate. When the positive electrode of the lithium thionyl chloride battery cell shrinks, the positioning bracket 015 can be pushed down based on a deformation recovery force of the first insulating member 053 to return the positioning bracket 015 to maintain the limiting effect on the positive electrode. Thus, the matching between the position of the positioning bracket 015 and the height of the positive electrode can be improved, thereby improving the consistency between the discharge capacity of the lithium thionyl chloride battery cell and the actual discharge amount, and further improving the reliability of the lithium thionyl chloride battery cell.

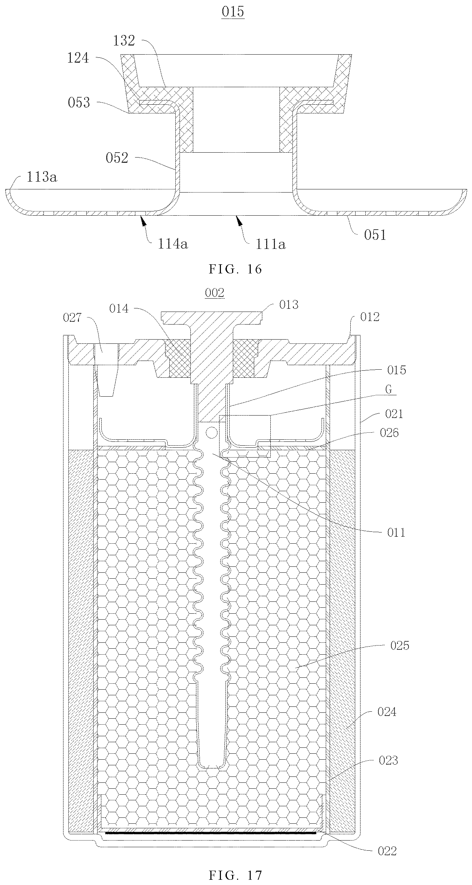

Please refer to FIG. 16. FIG. 16 is a schematic structural diagram of another positioning bracket 015 of the cover assembly 001 provided by embodiments of the present disclosure. In one embodiment, a sunken platform 132 is provided at the end of the first insulating member 053 away from the limiting plate 051.

In one embodiment, the sunken platform 132 is disposed around an axis of the mating hole 111a, and a table surface of the sunken platform 132 extends to the mating hole 111a.

In this embodiment, by providing the sunken platform 132, a thickness of the first insulating member 053 can be reduced, thereby increasing the deformation amount of the first insulating member 053 and increasing the deformation recovery force of the first insulating member 053 after being compressed. This ensures that the deformation recovery force of the first insulating member 053 can push down the positioning bracket 015 to a position consistent with the height of the positive electrode.

Please refer to FIG. 16. In one embodiment, the outer peripheral surface of the first insulating member 053 is a tapered surface, and a small diameter end of the tapered surface is arranged close to the limiting plate 051.

In a longitudinal section of the first insulating member 053, an angle between the outer peripheral surface of the first insulating member 053 and an axis of the first insulating member 053 ranges from 5° to 15°, and the angle may be but is not limited to 5°, 7.5°, 8°, 9.3°, 10.8°, 12°, 13°, or 15°.

In this embodiment, by the above arrangement, deformation directions of the first insulating member 053 after being compressed are consistent, thereby improving the stress state of the first insulating member 053 after being compressed, and further improving the reliability of the positioning bracket 015.

Please refer to FIG. 16. In one embodiment, the end of the abutting member 052 away from the limiting plate 051 is provided with a first everted edge 124, and the first everted edge 124 is provided inside the first insulating member 053.

Since the first insulating member 053 and the abutting member 052 are made of different materials, the bonding strength between them is weak, which may easily cause the first insulating member 053 and the abutting member 052 to separate

Based on this, in this embodiment, by the above arrangement, the connection strength between the first insulating member 053 and the abutting member 052 can be enhanced, thereby improving the reliability of the connection between the first insulating member 053 and the abutting member 052.

Please refer to FIG. 16. In one embodiment, along an axial direction of the mating hole 111a, a first flange 113a is provided on an outer periphery of the limiting plate 051, and the first flange 113a is located on the side of the limiting plate 051 close to the abutting member 052.

A chamfer is provided at a connection position between the first flange 113a and the limiting plate 051.

It can be understood that the lateral film is provided outside the positive electrode of the lithium thionyl chloride battery cell. In this embodiment, by providing the first flange 113a, the positioning bracket can be in contact with the lateral film through the first flange 113a during the installation process, thereby prevent the end of the limiting plate 051 from scratching the lateral film.

By providing the chamfer at the connection position between the first flange 113a and the limiting plate 051, the positioning bracket 015 can be guided to be installed to reduce the scratching of the lateral film when the positioning bracket 015 is installed.

Referring to FIG. 12, FIG. 13, and FIG. 16. In one embodiment, the limiting plate 051 is provided with a plurality of third through holes 114a.

Exemplarily, the third through holes 114a have multiple groups, the multiple groups of the third through holes 114a are evenly spaced around an axial direction of a first axis hole, and each group of the third through holes 114a includes a plurality of third through hole 114a arranged at intervals along the radial direction of the mating hole 111a.

In this embodiment, by providing the third through holes 114a on the limiting plate 051, the electrolyte of the lithium thionyl chloride battery cell can flow through the third through holes 114a, thereby improving the fluidity of the electrolyte, and further improving the reliability of the lithium thionyl chloride battery cell.

In one embodiment, the limiting plate 051 is configured such that a distance between it and the positive electrode is not greater than 1.5 mm, and/or the abutting member 052 is configured such that a distance between it and the cover plate of the lithium thionyl chloride battery cell is not less than 2.5 mm.

Specifically, the limiting plate 051 is configured such that the distance between the limiting plate 051 and the positive electrode is not greater than 1.5 mm, or the abutting member 052 is configured such that the distance between the abutting member 052 and the cover plate of the lithium thionyl chloride battery cell is not less than 2.5 mm, or the limiting plate 051 is configured such that the distance between the limiting plate 051 and the positive electrode is not greater than 1.5 mm, and the abutting member 052 is configured such that the distance between the abutting member 052 and the cover plate of the lithium thionyl chloride battery cell is not less than 2.5 mm.

Exemplarily, the distance between the limiting plate 051 and the positive electrode includes, but is not limited to, 0, 0.1 mm, 0.2 mm, 0.3 mm, 0.4 mm, 0.5 mm, 0.8 mm, 1 mm, 0.1 mm, 1.3 mm, or 1.5 mm. The distance between the abutting member 052 and the cover plate of the lithium thionyl chloride battery cell ranges from 2.5 mm to 15 mm, and includes but not limited to 0, 2.5 mm, 2.8 mm, 3.3 mm, 5 mm, 8 mm, 10 mm, 12 mm, 13 mm, 14 mm, or 15 mm.

When assembling the positioning bracket 015, the positioning bracket 015 can be in contact with the positive electrode, that is, the distance between the limiting plate 051 and the positive electrode is 0.

In this embodiment, through the above limitations, on the one hand, it can be avoided that the distance between the limiting plate 051 and the positive electrode is too large, resulting in the gap between the positive electrode and the positioning bracket 015 after liquid-absorbing expansion, thereby improving the discharge reliability of the lithium thionyl chloride battery cell; on the other hand, when the positive electrode has not yet completed liquid-absorbing expansion, the positioning bracket 015 can be prevented from abutting against the cover plate, thereby improving the stress state of the cover plate.

Please refer to FIG. 8. In one embodiment, the pole 013 and the body 111 are connected by plugging.

Specifically, the pole 013 has the shoulder 131. A small diameter section of the pole 013 is located on one side of the shoulder 131 close to the body 111. The small diameter section is inserted into the body 111, and the end of the body 111 abuts against the shoulder 131.

It can be understood that the current collection pin 011 is generally welded to the pole 013 by a collision welding process. Specifically, tools are used to hold the pole 013 and the current collection pin 011 respectively, and then an end surface of the pole 013 and an end surface of the current collection pin 011 are pressed against each other, and then they are welded. In this process, it is necessary to reserve enough clamping positions for the tooling on the pole 013, which results in a larger height dimension of the pole 013, thereby occupying a larger space inside the battery cell.

Based on this, in this embodiment, the pole 013 is plugged into the body 111, so that the two can be relatively fixed through the plugging, and then laser welding is used to directly weld the current collection pin 011 to the pole 013, so that there is no need to reserve clamping positions for tooling on the pole 013. As a result, the height dimension of the pole 013 is reduced, thereby reducing the space occupied by the pole 013 inside the battery cell, and thus allowing more electrolyte to be filled, and being beneficial to improving the reliability of the battery cell.

Please refer to FIG. 11. FIG. 11 is an enlarged view of position E in FIG. 6 provided by embodiments of the present disclosure. In one embodiment, the mounting hole 121 is a double stepped hole. A small diameter section of the double stepped hole is close to the body 111. The insulating seal 014 is disposed between a wall of the mounting hole 121 and the pole 013. Both sides of the insulating seal 014 are connected with an outer peripheral surface of the pole 013 and the wall of the mounting hole 121 by sealing, respectively.

It can be understood that after the battery cell completes the liquid filling, a sealing nail 027 needs to be pressed into a filling port 123 on the cover plate 012. During press-fitting, an impact force on the cover plate 012 is relatively large. The pole 013 is fixed relative to the cover plate 012 only through the insulating member. Therefore, when the sealing nail 027 is pressed, the sealing between the pole 013 and the cover plate 012 may be adversely affected.

Based on this, in this embodiment, by designing the mounting hole 121 as the double stepped hole, a contact area of between the sealing insulating member and the mounting hole 121 can be increased, thereby reducing the adverse effect on the sealing between the pole 013 and the cover plate 012 when press-fitting the sealing nail 027, and further improving the reliability between the pole 013 and the cover plate 012.

In addition, the cover plate 012 is formed by stamping a metal plate with a thickness of 1 mm. In the related arts, the mounting hole 121 is directly punched into a hole of equal diameter. At this time, in order to resist the adverse effects of the press-fitting of the sealing nail 027, a higher mounting hole 121 needs to be formed, and usually a mounting hole 121 with a height of 2 mm needs to be formed. However, a high requirement on process is necessary and it is difficult to form the mounting hole 121 with a thickness of 2 mm using the cover plate 012 with a thickness of 1 mm. In this embodiment, by the above arrangement, a metal plate with a thickness of 1 mm can be used to punch out a mounting hole 121 with a height of 1.8 mm. Not only can a cover assembly 001 with a better sealing effect be obtained, but the difficulty of molding can also be reduced and the manufacturing efficiency can be improved.

An aperture difference between two sections of the double stepped hole may be 0.1 mm, 0.15 mm, 0.2 mm, 0.25 mm, or 0.3 mm.

Please refer to FIG. 11. In one embodiment, the cover plate 012 is provided with the filling port 123, and one side of the cover plate 012 away from the current collection pin 011 is provided with an annular convex platform 122. The annular convex platform 122 is located between the filling port 123 and the pole 013.

It can be understood that an inner diameter of the annular convex platform 122 is consistent with a diameter of the mounting hole 121 on one side close to the annular convex platform 122. The sealing insulating member extends between the annular convex platform 122 and the pole 013.

It can be seen from this that pressing the sealing nail 027 may cause the cover plate 012 to receive a higher impact force, which may adversely affect the sealing between the pole 013 and the cover plate 012.

Based on this, in this embodiment, by providing the annular convex platform 122, the impact on the sealing between the pole 013 and the cover plate 012 during nail pressing can be reduced.

Please refer to FIG. 11. In one embodiment, the cover plate 012 is a stamped member. A first annular groove 124 is provided on one side of the cover plate 012 close to the current collection pin 011. The first annular groove 124 is opposite to the annular convex platform 122.

It can be understood that since the cover plate 012 is the stamped member, its middle part needs to be punched into the battery cell to form the mounting hole 121 that matches the pole 013. In order to form the annular convex platform 122, the cover plate 012 is required to have more material at the annular convex platform 122. However, direct thickening of the metal plate forming cover plate 012 not only results in an increase in material, but also requires many process changes.

Based on this, in this embodiment, during stamping, the material at the annular groove can be limited to move downward based on a limiting structure on the mold, thereby forming the annular groove on the side of the cover plate 012 close to a core of the battery cell and forming the annular convex platform 122 on the side of the cover plate 012 away from the core of the battery cell. In this way, the cover plate 012 which reduces the adverse effect of pressure nails on sealing and without thickening metal plate can be formed, thereby controlling relevant process changes and controlling the manufacturing costs of the cover plate 012.

Please refer to FIG. 6. In one embodiment, a convex platform 125 is provided on the side of the cover plate 012 close to the current collection pin 011. The convex platform 125 extends along the circumferential direction of the mounting hole 121.

It can be understood that when the cover plate 012 is a stamped member, the convex platform 125 is formed by stamping.

In this embodiment, by the above arrangement, a sealing mating surface between the cover plate 012 and the pole 013 can be increased, thereby improving the sealing reliability between the cover plate 012 and the pole 013.

Please refer to FIG. 17. FIG. 17 is a schematic structural diagram of a battery cell provided by embodiments of the present disclosure. Correspondingly, embodiments of the present disclosure also provide a battery cell. The battery cell includes the current collection pin 011 disclosed in some embodiments of the present disclosure or the cover assembly 001 disclosed in some embodiments of the present disclosure.

It can be understood that the battery cell also includes a shell 021, a bottom film 022 and a lateral film 023 disposed inside the shell 021, a negative electrode 024 disposed between the lateral film 023 and the shell 021, a positive electrode 025 disposed on an inner side of the lateral film 023, and an upper cover film 026 covering a top of the positive electrode. The cover plate 012 covers the opening of the shell 021 and is connected thereto by sealing. The current collection pin 011 is inserted into the positive electrode. After the liquid injection is completed, the sealing nail 027 is used to seal the filling port 123 of the cover plate 012.

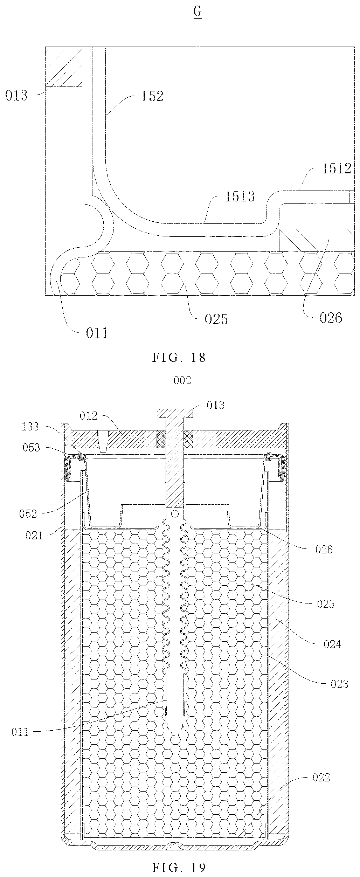

The contact part 1513 passes through the upper cover film 026 and then contacts the positive electrode 025, as illustrated in FIG. 18. FIG. 18 is an enlarged view of position Gin FIG. 17.

In this embodiment, by applying the current collection pin 011 or the cover assembly 001 disclosed in some embodiments of the present disclosure, the current collection pin 011 can not only control the space it occupies inside the battery cell, but also increase the outer surface area of the current collection pin 011, thereby increasing the contact area between the current collection pin 011 and the positive electrode, and further increasing the current collection area of the current collection pin 011. As a result, the discharge current of the battery cell can be increased, thereby expanding The present disclosure range of the battery cell.

In addition, when the battery cell is equipped with the positioning bracket 015, before the battery cell is filled with liquid, there is a gap between the resisting part 151 and the positive electrode. Optionally, the gap ranges from 1 mm to 4 mm. For example, the gap may be 2 mm. This gap can provide a buffer space for the expansion of the infiltration electrolyte, thereby improving the stress state of the positioning bracket 015, the stress state of the pole 013, and the stress state of the cover plate 012, and further improving the reliability of the battery cell.

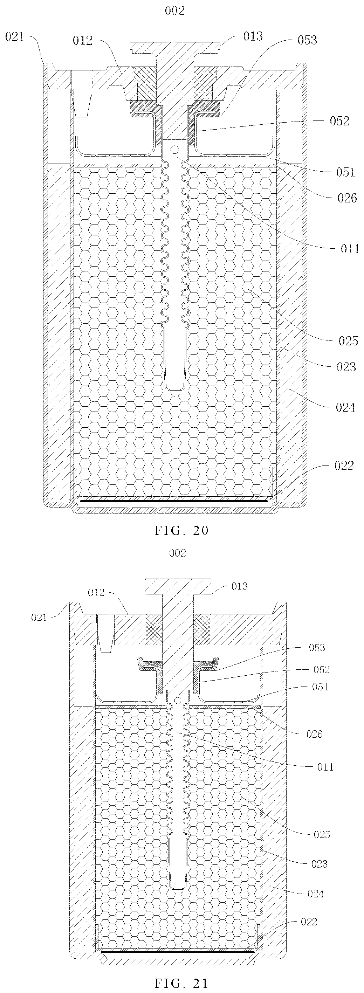

Please refer to FIG. 19, FIG. 20 or FIG. 21. FIG. 19 is a schematic structural diagram of another battery cell 002 provided by embodiments of the present disclosure, FIG. 20 is a schematic structural diagram of yet another battery cell 002 provided by embodiments of the present disclosure, and FIG. 21 is a schematic structural diagram of yet again another battery cell 002 provided by embodiments of the present disclosure. Correspondingly, embodiments of the present disclosure also provide the battery cell 002. The battery cell 002 includes the shell 021, the cover plate 012, the pole 013, a core pack, and the positioning bracket 015 disclosed in some embodiments of the present disclosure. The shell 021 has an accommodation cavity. The cover plate 012 is closed on the shell 021. The pole 013 is inserted in the cover plate 012. The core pack is arranged in the accommodation cavity. The core pack includes the bottom film 022, the upper cover film 026, and the positive electrode 025, the lateral film 023, and the negative electrode 024 arranged sequentially from the center of the shell 021 outward. The bottom film 022 is arranged on a bottom wall of the accommodation cavity. The upper cover film 026 is disposed on an end of the positive electrode 025 away from the bottom film 022. The limiting plate 051 is arranged opposite to the positive electrode 025. The abutting member 052 abuts against the pole or the inner wall of the shell 021 along the radial direction of the mating hole 111a. The first insulating member 053 insulates and isolates the abutting member 052 from components abutting against it, and the positioning bracket 015 is spaced apart from the cover plate 012.

It can be understood that during assembly, the limiting plate 051 may be abut against the positive electrode 025, or a certain gap may be left. The battery cell 002 in the embodiments is a lithium thionyl chloride battery cell.

In this embodiment, by using the positioning bracket 015 disclosed in some embodiments of the present disclosure, when electrolyte is injected into the battery cell 002 to cause the positive electrode 025 to absorb liquid and expand, the expanded positive electrode 025 can push the positioning bracket 015 to move, so that the position of the positioning bracket 015 can be adaptively adjusted based on the expansion height of the positive electrode 025 after absorbing liquid, so that the position of the positioning bracket 015 after the battery cell 002 is infiltrated can match the expansion height of the positive electrode 025. Thus, the positioning bracket 015 can be prevented from being damaged due to a large upward pushing force of the positive electrode 025, and the gap between the positive electrode 025 and the positioning bracket 015, which may cause poor discharge of the battery cell 002, can be avoided, thereby improving the reliability of the battery cell 002.

## Claims

1. A cover assembly (001), **characterized by** comprising:

    a current collection pin (011) comprising a body (111), wherein a slot body (112) is provided on an outer peripheral surface of the body (111);
    a cover plate (012) provided with a mounting hole (121);

a pole (013) inserted through the mounting hole (121), connected to the cover plate (012) through an insulating seal (014), and connected to one end of the body (111); and
a positioning bracket (015) sleeved on at least one the pole (013) and the current collection pin (011).

2. The cover assembly (001) according to claim 1, **characterized in that** the cover assembly (001) is applied to a lithium thionyl chloride battery cell, the positioning bracket (015) is stopped and matched with the pole (013), the positioning bracket (015) comprises a resisting part (151), and the resisting part (151) is configured to abut against a positive electrode (025) of the lithium thionyl chloride battery cell;

the positioning bracket (015) comprises a sleeving part (152) and the resisting part (151), the sleeving part (152) is sleeved on at least one the pole (013) and the current collection pin (011) and is stopped and matched with the pole (013), and an end of the sleeving part (152) facing away from the cover plate (012) is connected to the resisting part (151); and the resisting part (151) extends from the sleeving part (152) in a direction away from the axis of the current collection pin (011);
the positioning bracket (015) is a conductor, the resisting part (151) comprises a main body (1512) and a contact part(1523) protruding from a surface of the main body (1512) toward the positive electrode (025) of the battery cell, and the contact part(1523) is configured to contact the positive electrode (025) of the lithium thionyl chloride battery cell; and
the contact part (1523) is disposed between the main body (1512) and the sleeving part (152), and both ends of the contact part (1523) are connected to the main body (1512) and the sleeving part (152), respectively.

3. The cover assembly (001) according to claim 2, **characterized in that** the positioning bracket (015) further comprises a positioning ring (153), the positioning ring (153) is located between the resisting part (151) and the cover plate (012), and an end of the positioning ring (153) away from the cover plate (012) is connected to a periphery of the resisting part (151).

4. The cover assembly (001) according to claim 2 or claim 3, **characterized in that** the resisting part (151) is provided with a first through hole (1511), and the first through hole (1511) is configured for flowing an electrolyte; and
the pole (013) comprises a shoulder (131), a large diameter section of the pole (013) is located on one side of the shoulder (131) away from the positioning bracket (015), and the positioning bracket (015) abuts against the shoulder (131).

5. The cover assembly (001) according to claim 25, **characterized in that** the cover assembly (001) is applied to a lithium thionyl chloride battery cell, and the positioning bracket (015) comprises:

a limiting plate (051) provided with a mating hole (111a), wherein the limiting plate (051) is configured to limit an expansion of a positive electrode (025) of the lithium thionyl chloride battery cell;
an abutting member (052) provided on one side of the limiting plate (051) away from the positive electrode (025), wherein the abutting member (052) is configured to abut against an inner wall of a shell (021) or the pole (013) of the lithium thionyl chloride battery cell along a radial direction of the mating hole (111a); and
a first insulating member (053) provided on the abutting member (052), wherein the first insulating member (053) is configured to insulate and isolate the abutting member (052) from components abutting against it;
wherein the current collection pin (011) is inserted in the mating hole (111a);
wherein the abutting member (052) is configured to abut against the inner wall of the shell (021) along the radial direction of the mating hole (111a), the abutting member (052) is disposed on a periphery of the limiting plate (051), and the first insulating member (053) is disposed on one side of the abutting member (052) close to the inner wall of the shell (021)
wherein the abutting member (052) is a tubular structure, an end of the abutting member (052) is connected to the periphery of the limiting plate (051), and an outer wall of the abutting member (052) is configured to abut against the inner wall of the shell (021) along the radial direction of the mating hole (111a);
wherein the first insulating member (053) extends to an end of the abutting member (052) away from the limiting plate (051).
wherein the first insulating member (053) an elastic insulating member;
wherein a protrusion (133) is provided on an end of the first insulating member (053) away from the limiting plate (051); and
wherein the protrusion (133) extends along a circumferential direction of the mating hole (111a) to form an annular structure; or, a plurality of protrusions (133) are provided, and the plurality of protrusions (133) are spaced apart along the circumferential direction of the mating hole (111a).

6. The cover assembly (001) according to claim 5, **characterized in that** the abutting member (052) comprises a tube body (121a) and a ring body (122a), one end of the tube body (121a) is connected to the periphery of the limiting plate (051), the other end of the tube body (121a) is provided with a second everted edge (123), an outer periphery of the second everted edge (123) is connected to an end of the ring body (122a), the ring body (122a) is sleeved on one end of the tube body (121a) away from the limiting plate (051), an outer wall of the ring body (122a) is configured to abut against the inner wall of the shell (021) along the radial direction of the mating hole (111a), and the outer wall of the ring body (122a) is provided with the first insulating member (053);

   a second through hole (1231) is provided on the second everted edge (123), and the first insulating member (053) extends into the second through hole (1231) and is connected to a wall of the second through hole (1231);
   the positioning bracket (015) further comprises a second insulating member (054), the second insulating member (054) is disposed on one side of the second everted edge (123) close to the limiting plate (051), and the second insulating member (054) is connected to a portion of the first insulating member (053) located in the second through hole (1231);
   the ring body (122a) is disposed in the first insulating member (053); and
   the tube body (121a) is a tapered cylinder, and a small diameter end of the tapered cylinder is disposed close to the limiting plate (051).

7. The cover assembly (001) according to claim 5 or claim 6, **characterized in that** along an axial direction of the mating hole (111a), a second flange (112a) is provided on a periphery of the mating hole (111a), the second flange (112a) is located on one side of the limiting plate (051) close to the abutting member (052), and the second flange (112a) is sleeved on the current collection pin (011);

   an inner peripheral surface of the second flange (112a) is a tapered surface, and a large diameter end of the tapered surface is disposed close to the limiting plate (051);
   one end of the inner peripheral surface of the second flange (112a) close to the limiting plate (051) is a tapered surface, and the other end is a cylindrical surface (1121a); and
   a chamfer is provided on an end of an outer peripheral surface of the first insulating member (053) close to the limiting plate (051).

8. The cover assembly (001) according to any one of claim 5 to claim 7, **characterized in that** the abutting member (052) is configured to abut against the pole (013) along the radial direction of the mating hole (111a), the abutting member (052) is disposed at a periphery of the mating hole (111a), and the first insulating member (053) is disposed on one side of the abutting member (052) close to the pole (013);

   the abutting member (052) is a tubular structure, an end of the abutting member (052) is connected to the periphery of the mating hole (111a), the abutting member (052) is sleeved on the pole (013), and an inner wall of the pole (013) abuts against the mating hole (111a) along the radial direction of the abutting member (052);
   the first insulating member (053) extends to an end of the abutting member (052) away from the limiting plate (051);
   the first insulating member (053) is an elastic insulating member;
   a sunken platform (132) is provided at an end of the first insulating member (053) away from the limiting plate (051);
   the sunken platform (132) is disposed around an axis of the mating hole (111a), and a table surface of the sunken platform (132) extends to the mating hole (111a); and
   an outer peripheral surface of the first insulating member (053) is a tapered surface, and a small diameter end of the tapered surface is arranged close to the limiting plate (051).

9. The cover assembly (001) according to claim 8, **characterized in that** an end of the abutting member (052) away from the limiting plate (051) is provided with a first everted edge (124), and the first everted edge (124) is provided inside the first insulating member (053); and
   along an axial direction of the mating hole (111a), a first flange (113a) is provided on an outer periphery of the limiting plate (051), and the first flange (113a) is located on one side of the limiting plate (051) close to the abutting member (052).

10. The cover assembly (001) according to claim 5, **characterized in that** the limiting plate (051) is provided with a plurality of third through holes (114a); and
   the limiting plate (051) is configured such that a distance between it and the positive electrode (025) is not greater than 1.5 mm, or the abutting member (052) is configured such that a distance between it and the cover plate (012) is not less than 2.5 mm, or the limiting plate (051) is configured such that a distance between it and the positive electrode (025) is not greater than 1.5 mm and the abutting member (052) is configured such that a distance between it and the cover plate (012) is not less than 2.5 mm.

11. The cover assembly (001) according to any one of claim 1 to claim 10, **characterized in that** the pole (013) and the body (111) are connected by plugging; and

the pole (013) comprises a shoulder (131), a small diameter section of the pole (013) is located on one side of the shoulder (131) close to the body (111), the small diameter section is inserted into the body (111), and an end of the body (111) abuts against the shoulder (131).

12. The cover assembly (001) according to any one of claim 1 to claim 11, **characterized in that** the mounting hole (121) is a double stepped hole, a small diameter section of the double stepped hole is close to the body (111), the insulating seal (014) is disposed between a wall of the mounting hole (121) and the pole (013), and both sides of the insulating seal (014) are connected with an outer peripheral surface of the pole (013) and the wall of the mounting hole (121) by sealing, respectively.

13. The cover assembly (001) according to any one of claim 1 to claim 12, **characterized in that** the cover plate (012) is provided with a filling port (123), one side of the cover plate (012) away from the current collection pin (011) is provided with an annular convex platform (125)(122), and the annular convex platform (125)(122) is located between the filling port (123) and the pole (013); and

the cover plate (012) is a stamped member, a first annular groove (124) is provided on one side of the cover plate (012) close to the current collection pin (011), and the first annular groove (124) is opposite to the annular convex platform (125)(122).

14. The cover assembly (001) according to any one of claim 1 to claim 13, **characterized in that** a convex platform (125) is provided on one side of the cover plate (012) close to the current collection pin (011), and the convex platform (125) extends along a circumferential direction of the mounting hole (121).

15. A battery cell (002), **characterized by** comprising the cover assembly (001) of any one of claim 1 to claim 14.

Axis of annular groove

Axis of current collection pin

FIG. 1

A

FIG. 2

EP 4 636 859 A1

FIG. 3

FIG. 4

EP 4 636 859 A1

FIG. 5

FIG. 6

001

012    014    013

123    125    121    124

153

015    1112    112    1111    D

FIG. 7

D

013
131
152
1111
1112    1511    151
111

FIG. 8

001

013

012

014

123  125

121

153

015

1112

1111

112

1113

F

FIG. 9

F

013

152

1523

151

1512

011

FIG. 10

124

E

013    014    012    122

131    121    125    124

FIG. 11

015

133    H    053    123    122a

054

052    112a    111a    114a    051

I    121a

FIG. 12

015

053    124

113a    052

114a    111a    051

FIG. 13

H

FIG. 14

I

FIG. 15

FIG. 16

FIG. 17

G

FIG. 18

002

FIG. 19

002

FIG. 20

002

FIG. 21

Europäisches
Patentamt

European
Patent Office

Office européen
des brevets

# EUROPEAN SEARCH REPORT

**Application Number**

EP 25 15 2721

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 210 325 986 U (WUHAN FANSO TECH CO LTD) 14 April 2020 (2020-04-14) | 1,3-5, 9-15 | INV. H01M4/36 |
| Y | * the whole document * | 2 | H01M6/14 |
| A | | 6-8 | H01M50/107 |
| | ----- | | H01M50/152 |
| Y | US 2008/102366 A1 (ANGLIN DAVID L [US] ET AL) 1 May 2008 (2008-05-01) | 2 | H01M50/174 H01M50/188 |
| | * paragraph [0035]; figures 1-2 * | | H01M50/533 |
| | ----- | | H01M50/547 |
| A | WO 2015/074582 A1 (WANG XIAOWEI [CN]) 28 May 2015 (2015-05-28) | 1-15 | H01M50/552 H01M50/559 |
| | * the whole document * | | H01M50/567 |
| | ----- | | H01M50/586 |
| A | US 5 856 041 A (INOUE HIROSHI [JP] ET AL) 5 January 1999 (1999-01-05) | 1-15 | H01M50/59 H01M50/627 |
| | * the whole document * | | |
| | ----- | | |

**TECHNICAL FIELDS SEARCHED (IPC)**

H01M

The present search report has been drawn up for all claims

| Place of search | Date of completion of the search | Examiner |
|---|---|---|
| Munich | 24 July 2025 | Hornung, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 25 15 2721

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2025

| Patent document cited in search report | | Publication date | Patent family member(s) | | Publication date |
|---|---|---|---|---|---|
| CN 210325986 | U | 14-04-2020 | NONE | | |
| US 2008102366 | A1 | 01-05-2008 | AT | E499712 T1 | 15-03-2011 |
| | | | BR | PI0717925 A2 | 05-11-2013 |
| | | | EP | 2078315 A1 | 15-07-2009 |
| | | | JP | 2010507211 A | 04-03-2010 |
| | | | US | 2008102366 A1 | 01-05-2008 |
| | | | US | 2011244279 A1 | 06-10-2011 |
| | | | WO | 2008053424 A1 | 08-05-2008 |
| WO 2015074582 | A1 | 28-05-2015 | CN | 203562484 U | 23-04-2014 |
| | | | TW | M514118 U | 11-12-2015 |
| | | | WO | 2015074582 A1 | 28-05-2015 |
| US 5856041 | A | 05-01-1999 | DE | 69612537 T2 | 23-08-2001 |
| | | | EP | 0769820 A1 | 23-04-1997 |
| | | | JP | 3418283 B2 | 16-06-2003 |
| | | | JP | H09115500 A | 02-05-1997 |
| | | | US | 5856041 A | 05-01-1999 |

EPO FORM P0459

For more details about this annex : see Official Journal of the European Patent Office, No. 12/82